Europäisches Patentamt

**European Patent Office**

**Office européen des brevets**

(19)

(11) Veröffentlichungsnummer: **0 048 487**
**B1**

(12) **EUROPÄISCHE PATENTSCHRIFT**

(45) Veröffentlichungstag der Patentschrift:
**12.09.84**

(51) Int. Cl.³: **B 23 K 26/00**

(21) Anmeldenummer: **81107528.2**

(22) Anmeldetag: **22.09.81**

(54) **Verfahren zur Herstellung einer Codescheibe für optische Winkelschrittgeber bzw. Winkelcodierer.**

(30) Priorität: **24.09.80 DE 3036005**

(43) Veröffentlichungstag der Anmeldung:
**31.03.82 Patentblatt 82/13**

(45) Bekanntmachung des Hinweises auf die Patenterteilung:
**12.09.84 Patentblatt 84/37**

(84) Benannte Vertragsstaaten:
**CH FR GB IT LI SE**

(56) Entgegenhaltungen:
**CH - A - 353 175**
**DD - A - 12 762**
**DE - B - 1 055 249**
**US - A - 3 181 419**

(73) Patentinhaber: **SIEMENS AKTIENGESELLSCHAFT,**
**Berlin und München Wittelsbacherplatz 2,**
**D-8000 München 2 (DE)**

(72) Erfinder: **Golker, Walter, Pfundmayerstrasse 25,**
**D-8000 München 70 (DE)**

## Beschreibung

Die Erfindung bezieht sich auf ein Verfahren zur Herstellung einer Codescheibe für optische Winkelschrittgeber bzw. Winkelcodierer, wobei lichtdurchlässige Codierspuren als Codemuster durch partielles Entfernen einer auf die Codescheibe aufgebrachten lichtundurchlässigen Schicht erzeugt werden und wobei das auf der Codescheibe erzeugte Muster exakt zu einer die Codescheibe tragenden Welle zentriert wird.

Bei optischen Winkelschrittgebern oder Winkelcodierern werden üblicherweise die Schlitzmuster auf fotografischem Wege kopiert und durch partielles Abätzen einer lichtundurchlässigen Schicht, welche auf einer lichtdurchlässigen Scheibe aufgebracht ist, hergestellt. Daneben sind auch Verfahren bekannt, bei denen die Codierung auf einer Scheibe durch fotografisches Aufzeichnen und galvanisches Auftragen hergestellt wird.

Bei den bekannten Verfahren wird immer zunächst die Codescheibe als solche hergestellt und danach gelagert. Zu diesem Zweck muss das auf der Scheibe erzeugte Schlitzmuster nachträglich durch besondere Vorkehrungen ausgemittelt werden, z. B. mit einer genauen Zentierbohrung oder einem lichtdurchlässigen Zentrierkreis. Bei der Montage der Schlitzscheibe auf einer gelagerten Welle muss dann mit hohem Zeitaufwand das Schlitzmuster exakt zentriert werden.

Aus der DE-A-1 055 249 ist eine Einrichtung zur Herstellung von Präzisionskreisteilungen für fotografische Reproduktionen bekannt, wobei auf einem rotierenden Teilungsträger mit lichtempfindlicher Schicht Teilungsmarkierungen mittels einer periodisch einwirkenden Lichtquelle erzeugt werden. Über die Art der Lagerung des Teilungsträgers ist dort nichts ausgesagt. Da die Teilungsmarkierungen dort jedoch durch partielle Belichtung einer lichtempfindlichen Schicht erzeugt werden, muss sich ein Entwicklungsvorgang anschliessen, bei dem der Teilungsträger im allgemeinen ohne Lagerelemente behandelt werden muss. Er muss also nach der Entwicklung des Codemusters erst auf einer Drehwelle gelagert werden, womit die bereits erwähnten Schwierigkeiten auftreten. Da es sich im übrigen bei dem Teilungsträger um eine Mutterkreisteilung handelt, von welcher fotografische Reproduktionen erstellt werden sollen, ergibt sich das Problem der mittigen Lagerung der danach hergestellten Codescheiben in jedem Fall.

In der US-A-3 181 419 wird die Herstellung eines Films mit dem Muster einer Codescheibe für fotografische Vervielfältigung beschrieben. Dabei wird das Muster durch Belichtung des Films über ein Stroboskop erzeugt, während der Mittelpunkt für die spätere Codescheibe ebenfalls mittels einer punktförmigen Lichtquelle festgelegt wird. Die durch fotografische Vervielfältigung erhaltene Codescheibe muss jedoch in üblicher Weise nachträglich gelagert werden, wobei die oben erwähnten Schwierigkeiten bei der Einhaltung einer genauen zentrischen Lagerung auftreten.

Aufgabe der Erfindung ist es, bei der Herstellung von Codescheiben der eingangs erwähnten Art den hohen Aufwand für die nachträgliche Zentrierung zu vermeiden und trotzdem eine genaue zentrische Lagerung der Codescheibe zu gewährleisten.

Erfindungsgemäss wird diese Aufgabe dadurch gelöst, dass zunächst die mit der lichtundurchlässigen Schicht versehene Codescheibe mit der in Lagerungen aufgenommenen Welle verbunden wird und dass man mittels eines Laserstrahlsenders das Codemuster in die lichtundurchlässige Schicht eingebrannt wird, wobei der Laserstrahlsender jeweils über eine Winkelschrittsteuerung relativ zur Welle positioniert wird.

Beim erfindungsgemässen Verfahren wird also anstelle der nachträglichen Zentrierung die Codescheibe bereits vor dem Aufbringen des Codemusters mit der gelagerten Welle verbunden, und das Codemuster wird danach erst auf der Scheibe erzeugt. Dies wird möglich durch die erfindungsgemässe Erzeugung des Codemusters mittels Laserstrahl. Damit vermeidet man die Behandlung der Codescheibe in fotografischen bzw. galvanischen Bädern, die bei der gelagerten Welle zumindest problematisch, wenn nicht völlig unmöglich wäre.

In einfachster Weise kann zur Ausführung des erfindungsgemässen Verfahrens die Welle mit der Codierscheibe mit einer Winkelmesseinrichtung verbunden und vor jeder Betätigung der Laserstrahlkanone in eine vorgegebene Winkelstellung gebracht werden. In weiterer Ausgestaltung dieses Verfahrens kann der Laserstrahl mit einer bestimmten Taktfrequenz geschaltet und die die Codescheibe tragende Welle mit einem in Abhängigkeit von der Taktfrequenz gesteuerten Motor angetrieben werden. Eine andere Ausführungsmöglichkeit besteht darin, mit der Welle eine Muster-Codescheibe zu koppeln, deren Codemuster abzutasten und die Laserstrahlkanone in Abhängigkeit von dem abgetasteten Codemuster zu betätigen.

Die Erfindung wird nachfolgend an Ausführungbeispielen anhand der Zeichnung näher erläutert. Es zeigt

Fig. 1 eine Anordnung zur erfindungsgemässen Herstellung einer Codescheibe mit einer Winkelstellungsvorrichtung,

Fig. 2 eine Weiterbildung von Fig. 1 mit einer Taktsteuerung für den Antrieb der Codescheibe und den Betrieb der Laserstrahlkanone,

Fig. 3 die Herstellung einer Codescheibe mit Abtastung einer Muster-Codescheibe.

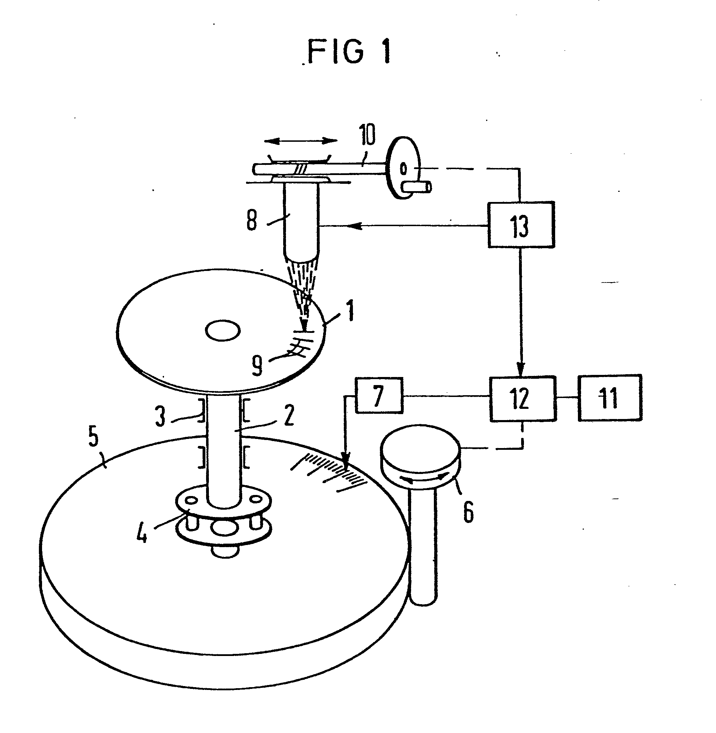

In Fig. 1 ist schematisch eine Anordnung zur Erzeugung einer Codierung einer Codescheibe gezeigt. Die Codescheibe 1 ist dabei mit einer lichtundurchlässigen Schicht überzogen. Es handelt sich beispielsweise um eine mit Nickel bedampfte Glasscheibe. Auf dieser Codescheibe 1 soll das Codemuster 9 durch partielles Entfernen der nicht weiter dargestellten lichtundurchlässigen Schicht erzeugt werden, und diese Codierung soll genau zentrisch zur späteren Drehachse der Codescheibe angeordnet sein. Zu diesem Zweck wird die Codescheibe 1 zunächst ohne besondere Genauigkeit auf der Welle 2 montiert, deren Lagerung 3 nur angedeutet ist. Nun wird diese Welle 2 mit der Scheibe 1 über eine Kupplung 4 mit einer hochauflösenden Winkelmesseinrichtung 5 verbunden. Diese Winkelmesseinrichtung kann über eine Einstellvorrichtung 6 genau auf bestimmte Winkelstellungen eingstellt werden, die jeweilige Winkelstellung wird über eine Abtasteinrichtung 7 gemessen.

Die Codierung der Codescheibe 1 erfolgt über eine Laserstrahlkanone 8, welche in geeigneter Weise über der Codescheibe angeordnet ist. Mit dem von ihr erzeugten Laserstrahl können Codespuren 9 in die lichtundurchlässige Schicht der Codescheibe 1 eingebrannt werden. Um beispielsweise einen Strich zu erzeugen, kann die Laserstrahlkanone mit einer geeigneten Verstellvorrichtung 10 verschoben werden. Anstelle des schematisch dargestellten Gewindevorschubs kann natürlich jede andere Verstelleinrichtung verwendet werden.

Über eine Sollwerteingabe 11 kann beispielsweise eine beliebige Winkelstellung gewählt werden, an der eine Codespur erzeugt werden soll. Dieser Sollwert wird mit der von der Abtasteinrichtung 7 gelieferten tatsächlichen Winkelstellung in der Vergleichseinrichtung 12 verglichen. Stimmt die gemessene Winkelstellung mit dem Sollwert überein, so wird über eine Schalteinrichtung 13 die Laserstrahlkanone in Betrieb genommen. Dieser Schalter 13 kann beispielsweise ein monostabiler Schalter sein, der die Laserstrahlkanone für eine bestimmte vorgegebene Zeit einschaltet. Von dem Schalter 13 aus kann auch die Längsverstelleinrichtung 10 gesteuert werden.

Die Einstellvorrichtung 6 kann beispielsweise von Hand betätigt werden. Sie kann aber auch als Motor ausgebildet sein, welcher in Abhängigkeit von der Vergleichseinrichtung 12 solange läuft, bis der eingestellte Sollwert erreicht ist. In der Praxis wird zweckmässigerweise der Sollwert Schritt für Schritt erhöht. Damit wird die Winkelmesseinrichtung 5 und mit ihr die Codescheibe 1 jeweils um eine Winkelstellung weitergedreht. Bei jeder Winkelstellung kann dann ein Codestrich in die Codescheibe 1 eingebrannt werden.

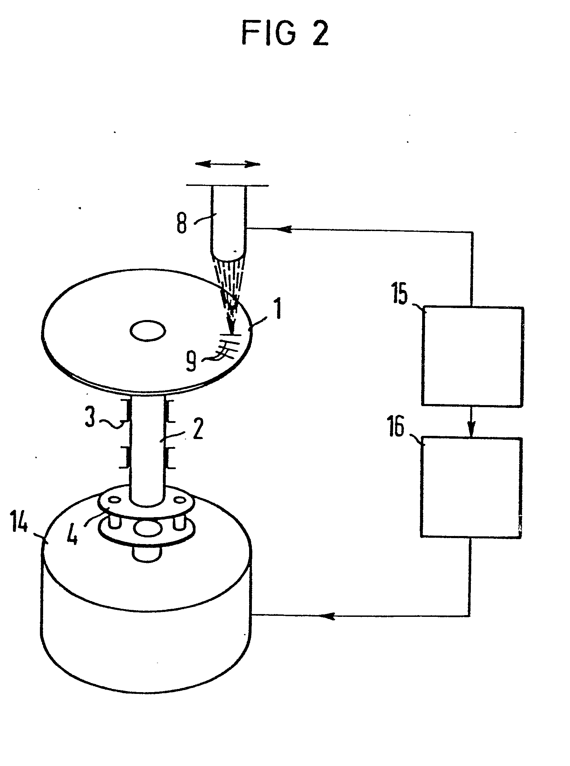

Die Fig. 2 stellt eine Weiterentwicklung der Anordnung von Fig. 1 dar. Anstelle der Winkelmessvorrichtung ist ein Motor 14 vorgesehen, der unmittelbar über die Kupplung 4 an die Welle 2 und die Codescheibe 1 angekoppelt ist. Ein Taktgenerator 15 betreibt die Laserstrahlkanone 8 mit Impulsen, während die Codescheibe 1 vom selben Taktgenerator gesteuert wird. Der Motor 14 kann ein sehr gleichmässig laufender Synchronmotor oder ein Schrittmotor sein. Zur Bestimmung der Motordrehzahl wird dessen Erregerfrequenz von der Laserstrahltaktfrequenz über einen Frequenzteiler 16 abgeleitet. Durch Änderung des Teilungsverhältnisses für die Erregerfrequenz des Motors können unterschiedliche Teilungen auf der Codescheibe 1 erzeugt werden.

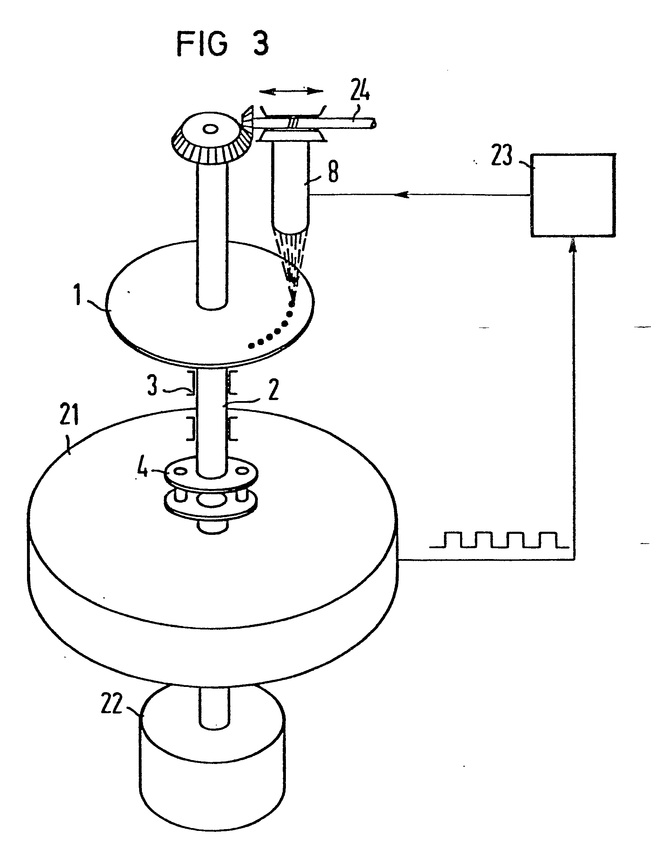

Eine weitere Anordnung zur Ausführung des erfindungsgemässen Verfahrens zeigt Fig. 3. Auch in diesem Fall ist die Codescheibe 1 mit einer Welle 2 verbunden. Die Welle 2 ist in diesem Fall über die Kupplung 4 mit einer Muster-Codescheibe 21 verbunden, welche mit einem Motor 22 angetrieben wird.

Über eine nicht weiter dargestellte Abtasteinrichtung wird das Codemuster in Einzelspuren abgetastet und in Form eines Bitmusters an eine Steuereinrichtung 23 für die Laserstrahlkanone 8 weitergegeben. Damit wird der Laserstrahl immer dann eingeschaltet, wenn auf der Muster-Codescheibe eine lichtdurchlässige Stelle vorhanden ist. Das Codemuster der Muster-Codescheibe wird also genau kopiert. Der Motor 22 kann in diesem Fall in seiner Drehzahl variabel sein. Mit einer drehzahlabhängigen Verstelleinrichtung 24 (schematisch als Kegelradgetriebe dargestellt) kann die Laserstrahlkanone 8 gegenüber der Drehachse der Codescheibe 1 radial verstellt werden.

## Patentansprüche

1. Verfahren zur Herstellung einer Codescheibe (1) für optische Winkelschrittgeber bzw. Winkelcodierer, wobei lichtdurchlässige Codierspuren (9) als Codemuster durch partielles Entfernen einer auf die Codescheibe (1) aufgebrachten lichtundurchlässigen Schicht erzeugt werden und wobei das auf der Codescheibe (1) erzeugte Muster (9) exakt zu einer die Codescheibe (1) tragenden Welle (2) zentriert wird, dadurch gekennzeichnet, dass zunächst die mit der lichtundurchlässigen Schicht versehenen Codescheibe (1) mit der in Lagerungen (3) aufgenommenen Welle (2) verbunden wird und dass dann mittels eines Laserstrahlsenders (8) das Codemuster (9) in die lichtundurchlässige Schicht eingebrannt wird, wobei der Laserstrahlsender (8) jeweils über eine Winkelschrittsteuerung (5, 14, 22) relativ zur Codescheibe (1) positioniert wird.

2. Verfahren nach Anspruch 1, dadurch gekennzeichnet, dass die die Codierscheibe (1) tragende Welle (2) mit einer Winkelmesseinrichtung (5) verbunden und vor jeder Betätigung des Laserstrahlsenders (8) in eine vorgegebene Winkelstellung gebracht wird.

3. Verfahren nach Anspruch 1, dadurch gekennzeichnet, dass der Laserstrahl mit einer bestimmten Taktfrequenz (15) geschaltet und die die Codescheibe (1) tragende Welle (2) mit einem in Abhängigkeit von der Taktfrequenz gesteuerten Motor (14) angetrieben wird.

4. Verfahren nach Anspruch 1 oder 2, dadurch gekennzeichnet, dass mit der Welle (1) eine Muster-Codescheibe (21) konzentrisch gekoppelt wird und dass deren Codemuster über eine Abtasteinrichtung in Form von Steuersignalen für den Laserstrahlsender (8) umgesetzt wird.

## Claims

1. A process for the production of a code disc (1) for optical angle-step signallers or angle coders, as the case may be, including the step of producing light-permeable coder tracks (9) with a code pattern by partially removing a light-impermeable layer applied to the code disc (1), the pattern (9) applied to the code disc (1) being precisely centred with respect to a shaft (2) which bears the code disc (1), characterised in that the code disc (1) provided with the light-impermeable layer is firstly connected to the shaft (2), which is accommodated in bearings (3), and that then a laser beam transmitter (8) is used to burn the code pattern (9) into the light-impermeable layer, on each occasion the laser beam transmitter (8) being positioned relative to the code disc (1) via an angle-step control unit (5, 14, 22).

2. A process as claimed in claim 1, characterised in that the shaft (2) which bears the code disc (1) is connected to an angle measuring device (5), and is brought into a predetermined angular position prior to each actuation of the laser beam transmitter (8).

3. A process as claimed in claim 1, characterised in that the laser beam is switched by a specific clock pulse frequency (15) and the shaft (2) which bears the code disc (1) is driven by a motor (14) which is controlled in dependence upon the clock pulse frequency.

4. A process as claimed in claim 1 or claim 2, characterised in that the shaft (1) is concentrically coupled to a pattern-code disc (21) and that the code pattern thereof is converted via a sensing device into the form of control signals for the laser beam transmitter (8).

**Revendications**

1. Procédé pour fabriquer un disque de code (1) pour des générateurs optiques de pas angulaires ou pour des codeurs angulaires optiques, selon lequel on réalise des marques de codage (9) transparentes à la lumière et servant de modèles de code, par élimination partielle d'une couche opaque déposée sur le disque de code (1) et selon lequel on centre de façon précise le modèle (9), réalisé sur le disque de code (11), sur un arbre (2) portant le disque de code (1), caractérisé par le fait qu'on relie tout d'abord le disque de code (1), muni de la couche opaque, à l'arbre (2) monté dans des paliers (3), et qu'on réalise, par brûlage, à l'aide d'un émetteur de rayon laser (8), le modèle de code (9) dans la couche opaque, l'émetteur du rayon laser (8) étant amené dans ses positions respectives par rapport au disque de code (1) par l'intermédiaire d'un dispositif (5, 14, 25) de commande de pas angulaires.

2. Procédé suivant la revendication 1, caractérisé par le fait qu'on relie l'arbre (2) qui porte le disque de code (1) à un dispositif de mesure d'angle (5) et qu'on le place dans une position angulaire prédéterminée avant chaque commande de l'émetteur du rayon laser (8).

3. Procédé suivant la revendication 1, caractérisé par le fait que le rayon laser est branché avec une fréquence d'horloge (15) déterminée et que l'arbre (2) portant le disque de code (1) est entraîné par un moteur (4) commandé en fonction de la fréquence d'horloge.

4. Procédé suivant la revendication 1 ou 2, caractérisé par le fait qu'un disque de code mère (21) est accouplé concentriquement à l'arbre (1) est que son modèle de code est converti, par l'intermédiaire d'un dispositif d'exploration, sous la forme de signaux de commande pour l'émetteur du rayon laser (8).

FIG 1

# FIG 2

# FIG 3